# EUROPÄISCHE PATENTSCHRIFT

(11) **EP 4 094 207 B1**
(45) Veröffentlichungstag und Bekanntmachung des Hinweises auf die Patenterteilung: **20.08.2025**
(21) Anmeldenummer: 20824462.4
(22) Anmeldetag: 26.11.2020
(51) Int. Cl.: G06Q 10/0639, G06Q 30/018

(54) **VERFAHREN ZUR BEGUTACHTUNG UND KENNZEICHNUNG EINES ERZEUGNISSES**
METHOD FOR APPRAISING AND IDENTIFYING A PRODUCT
PROCÉDÉ PERMETTANT D'ÉVALUER ET D'IDENTIFIER UN PRODUIT

(30) Priorität: 23.01.2020 DE 102020200807
(43) Veröffentlichungstag der Anmeldung: 30.11.2022
(73) Patentinhaber: TÜV NORD Systems GmbH & Co. KG, 22525 Hamburg (DE)
(72) Erfinder: SCHIKORRA, Olaf, 49545 Tecklenburg (DE)
(74) Vertreter: VKK Patentanwälte PartG mbB
(86) Internationale Anmeldenummer: PCT/EP2020/083506
(87) Internationale Veröffentlichungsnummer: WO 2021/148169

(56) Entgegenhaltungen:
- JP-A- H08 178 834
- US-A1- 2012 281 877
- US-A1- 2014 012 412
- US-A1- 2014 139 608
- US-A1- 2018 126 763

## Beschreibung

Die vorliegende Erfindung betrifft ein Verfahren zur Begutachtung und Kennzeichnung eines Erzeugnisses, eine Kennzeichnungseinheit zur Kennzeichnung eines Erzeugnisses sowie ein Kennzeichnungssystem zur Begutachtung und Kennzeichnung eines Erzeugnisses.

Verfahren zur Begutachtung und Kennzeichnung sind grundsätzlich bekannt. US 2014/139608 A1 beschreibt ein System mit einer Markierungsvorrichtung für Edelsteine, welche aus der Ferne durch einen Computer gesteuert werden kann. US 2018/126763 beschreibt ein System zum Ferndrücken einer Markierung auf ein Sicherheitsdokument. Bei Produkten mit einer definierten Gefährdungsstufe fordern einschlägige Vorschriften, die Kennzeichnung eines jeden einzelnen Produktes. Dem Werkstoff bzw. dem Erzeugnis wird ein Abnahmeprüfzeugnis beispielsweise nach DIN EN 10204, gegebenenfalls unter zusätzlicher Mitwirkung eines Abnahmebeauftragten gemäß den amtlichen Vorschriften, z.B. einer notifizierten Stelle ausgestellt und der Werkstoff bzw. das Erzeugnis wird gekennzeichnet mit einer Kennzeichnung. Insbesondere bei Werkstoffen ist eine Erneuerung dieser Kennzeichnung oftmals erforderlich. Dies ist insbesondere dann der Fall, wenn die Bearbeitung des Werkstoffes zur Entfernung der Kennzeichnung führt. Bestimmte Prüfzeugnisse und/oder -anforderungen fordern in diesem Fall, dass das Anbringen einer neuen Kennzeichnung durch eine notifizierte und/oder zur Abnahme beauftragte Stelle zu erfolgen hat und nicht durch das bearbeitende Unternehmen. Dieser Prozess wird auch als Begutachtung und Kennzeichnung oder als Umstempeln bezeichnet.

Vor der Begutachtung und Kennzeichnung wird von dem bearbeitenden Unternehmen in der Regel der Abnahmebeauftragte oder die notifizierte Stelle informiert bzw. beauftragt und/oder persönlich kontaktiert. Ein Mitarbeiter der notifizierten Stelle sucht das Unternehmen auf und überprüft, ob vor Ort die erforderlichen Rahmenbedingen für den Umstempelprozess vorliegen, ebenfalls überprüft er visuell das Vorhandensein der oben beschriebenen Werkstoff-Kennzeichnung. Im anschließenden Vorgang wird die neue Kennzeichnung an einer anderen Position des Erzeugnisses angebracht. Diese neue Kennzeichnung trägt üblicherweise ein Siegel der notifizierten und/oder zur Abnahme beauftragten Stelle. Anschließend kann das Erzeugnis bearbeitet werden, wobei die erste Kennzeichnung durch die Bearbeitung entfernt werden kann, da das Erzeugnis nun durch die zweite verbleibende Kennzeichnung eindeutig gekennzeichnet bzw. identifizierbar ist.

Zur Rückverfolgbarkeit im laufenden Produktionsprozess sowie gegebenenfalls am fertigen Produkt ist üblicherweise der Erhalt der Kennzeichnung dieser Produkte zu gewährleisten, auch wenn beim Trennen, Bearbeiten oder der Oberflächenbehandlung die originale Kennzeichnung abgearbeitet, und/oder unkenntlich wird bzw. wurde. Hierfür werden die Begutachtung und Kennzeichnung bzw. das Umstempeln genutzt. Das Herstellerzeichen wird dabei durch das Zeichen des Gutachters, z.B. ein Abnahmebeauftragter oder eine notifizierte und/oder zur Abnahme beauftragte Stelle, ersetzt. Die Übertragung der Kennzeichnung wird durch den Abnahmebeauftragten oder die notifizierte und/oder zur Abnahme beauftragte Stelle überprüft und bei ordnungsgemäßer Übertragung mit dem entsprechenden Siegel gegengestempelt und somit die Richtigkeit der Übertragung bestätigt. Die alte und neue Kennzeichnung wird anschließend in einer sogenannten Umstempelungsbescheinigung dokumentiert.

Die Begutachtung und Kennzeichnung bzw. das Umstempeln ist insbesondere definiert als die Übertragung der Ursprungskennzeichnung des Werkstoffherstellers vor dem Trennen oder Bearbeiten von gekennzeichneten Produkten.

Der bestehende Prozess zur Begutachtung und Kennzeichnung erfordert somit nach dem bisherigen Verfahren die Anwesenheit eines Mitarbeiters der notifizierten und/oder zur Abnahme beauftragten Stelle. Infolge dessen ist die Begutachtung und Kennzeichnung eines Erzeugnisses üblicherweise mit einem großen Zeitaufwand verbunden, da der Mitarbeiter der notifizierten und/oder zur Abnahme beauftragten Stelle persönlich anwesend sein muss. Darüber hinaus ist der Prozess zur Begutachtung und Kennzeichnung aufwendig, da neben dem eigentlichen Prozess der Begutachtung und Kennzeichnung auch eine Vielzahl an Terminen koordiniert werden müssen. Ferner ist die persönliche Anwesenheit des Mitarbeiters der zertifizierenden Stelle kostenintensiv. Neben der eigentlichen Tätigkeit der Begutachtung und Kennzeichnung fallen zusätzliche Reisezeiten an.

Es ist daher eine Aufgabe der vorliegenden Erfindung, ein Verfahren zur Begutachtung und Kennzeichnung eines Erzeugnisses, eine Kennzeichnungseinheit zur Kennzeichnung eines Erzeugnisses sowie ein Kennzeichnungssystem zur Begutachtung und Kennzeichnung eines Erzeugnisses bereitzustellen, die einen oder mehrere der genannten Nachteile vermindern oder beseitigen. Insbesondere ist es eine Aufgabe der Erfindung, eine Lösung bereitzustellen, die einen effizienteren Prozess ermöglichen. Zumindest ist es eine Aufgabe der Erfindung, eine Lösung bereitzustellen, die ein alternatives Verfahren zur Begutachtung und Kennzeichnung bereitstellt.

Die vorliegende Erfindung ist durch die beigefügten unabhängigen Ansprüche definiert, und bevorzugte Aspekte der Erfindung sind durch die beigefügten abhängigen Ansprüche definiert.

Gemäß einem ersten Aspekt wird diese Aufgabe gelöst durch ein Verfahren zur Begutachtung und Kennzeichnung eines Erzeugnisses mit einer ersten Kennzeichnung, die an einer ersten Position des Erzeugnisses angeordnet ist, umfassend die Schritte: Erzeugen einer zweiten Kennzeichnung auf Basis der ersten Kennzeichnung, wobei das Erzeugen der zweiten Kennzeichnung mittels eines Gutachterendgeräts erfolgt, datenbasiertes Empfangen der zweiten Kennzeichnung durch ein Kundenendgerät und datenbasiertes Übertragen der zweiten Kennzeichnung an eine Kennzeichnungseinheit, und Aufbringen der zweiten Kennzeichnung an einer zweiten Position des Erzeugnisses mittels der Kennzeichnungseinheit und visuelle Übertragung des Aufbringens an das Gutachterendgerät.

Das Gutachterendgerät ist insbesondere als ein bei einem unabhängigen Dritten vorliegendes Endgerät zu verstehen. Das Erzeugnis kann insbesondere ein Werkstoff bzw. ein Werkstück sein. Die erste Kennzeichnung kann beispielsweise den Namen des Herstellers, einen Stahlkurznamen und/oder eine Werkstoffnummer, eine Identifizierungsnummer, welche eine Zuordnung zu einer Schmelze und/oder einer (Produktions-) Charge gestattet, und/oder ein Zeichen des Abnahmebeauftragten sein. Die erste Kennzeichnung ist an einer ersten Position des Erzeugnisses angeordnet bzw. angebracht. Üblicherweise ist die erste Kennzeichnung durch einen Abnahmebeauftragten des Herstellers angebracht oder zumindest die Anbringung von diesem beaufsichtigt worden.

Bei der Bearbeitung des Erzeugnisses kann es vorkommen, dass die erste Kennzeichnung abgetragen wird. Alternativ kann es bei der Trennung des Erzeugnisses in zwei einzelne Erzeugnisse vorkommen, dass der eine Teil die erste Kennzeichnung trägt und der zweite Teil keine Kennzeichnung trägt. In diesen Fällen ist es ebenfalls erforderlich, dass eine zweite Kennzeichnung auf dem Erzeugnis angeordnet wird. Diese zweite Kennzeichnung darf ab einer bestimmten Gefährdungsstufe nicht mehr vom Hersteller in Eigenverantwortung selber erfolgen, sondern muss zumindest unter Aufsicht von einer notifizierten und/oder zur Abnahme beauftragten Stelle angebracht und dokumentiert werden. Hierzu wird auf Basis der ersten Kennzeichnung die zweite Kennzeichnung erzeugt. Die zweite Kennzeichnung wird mittels des Gutachterendgerätes erzeugt. Es ist insbesondere bevorzugt, dass die zweite Kennzeichnung an das Kundenendgerät mittels des Gutachterendgerätes gesendet wird. Hierfür ist es insbesondere bevorzugt, dass das Gutachterendgerät und das Kundenendgerät mittels einer Datenverbindung miteinander verbunden werden oder sind.

Die zweite Kennzeichnung wird durch das Kundenendgerät datenbasiert empfangen. Dieses Empfangen kann beispielsweise mittels einer Datenverbindung erfolgen, insbesondere per E-Mail oder über eine Videoverbindung, die vorzugsweise gesichert ausgebildet ist. Von dem Kundenendgerät wird die zweite Kennzeichnung an die Kennzeichnungseinheit übertragen. Dies kann beispielsweise derart erfolgen, dass die zweite Kennzeichnung auf einem Bildschirm des Kundenendgeräts angezeigt wird und mittels der Kennzeichnungseinheit von diesem Bildschirm erfasst, insbesondere gescannt, bzw. per QR-Code übertragen wird.

Durch Verwendung 2-Zweidimensionaler Codes, z.B. QR-Codes können den zu übertragenen Daten weitere Sicherheitsmerkmale angehängt werden. Neben der Signatur der notifizierten und/oder berechtigten Stelle können beispielsweise. Datum, Signatur des Gutachters, Zeit und/oder weitere Daten wie fortlaufende Nummer aufgebracht werden. Mit Aufnahme dieser zusätzlichen Daten z.B. in den Bericht zur Begutachtung und Kennzeichnung ist eine eineindeutige Zuordnung zwischen Bericht und Erzeugnis gegeben.

Mittels dieses Prozesses ist die zweite Kennzeichnung demnach von dem Gutachterendgerät hin zur Kennzeichnungseinheit übertragen worden. Die Kennzeichnungseinheit wird nun zum Aufbringen der zweiten Kennzeichnung an einer zweiten Position des Erzeugnisses verwendet. Damit die zertifizierende Stelle das Aufbringen der zweiten Kennzeichnung gemäß einer Verordnung, einer Richtlinie und/oder einer Kundenanforderung überwachen kann, erfolgt eine visuelle Übertragung des Aufbringens an das Gutachterendgerät.

Infolgedessen besteht die Möglichkeit, dass ein Gutachter der notifizierten und/oder zur Abnahme beauftragten Stelle nicht unmittelbar vor Ort des Erzeugnisses sein muss. Der Gutachter, insbesondere der Abnahmebeauftragte kann sich in einer vom Erzeugnis entfernten Gutachterstelle bzw. -position befinden. Dort erhält er die erste Kennzeichnung und kann mittels des Gutachterendgerätes die zweite Kennzeichnung erzeugen. Anschließend kann die zweite Kennzeichnung an das Kundenendgerät übersendet werden, das Kundenendgerät empfängt die zweite Kennzeichnung und die zweite Kennzeichnung kann im Anschluss an die Kennzeichnungseinheit übertragen werden.

Ein Bediener, beispielsweise des beauftragenden Unternehmens, kann mittels der Kennzeichnungseinheit, die beispielsweise ein Nadelmarkierer ist, die zweite Kennzeichnung auf das Erzeugnis an einer zweiten Position aufbringen. Dieses Aufbringen wird durch eine visuelle Übertragung an das Gutachterendgerät von dem Gutachter in einer vorzugsweise von dem Erzeugnis entfernten Position überwacht und gesteuert, wobei die entfernte Position keine unmittelbare Inaugenscheinnahme ermöglicht.

Infolgedessen kann der Prozess zur Begutachtung und Kennzeichnung durch einen Gutachter überwacht und gesteuert werden, ohne dass der Gutachter selber vor Ort des Erzeugnisses ist. Darüber hinaus ist dieses Verfahren fälschungssicher, da der Gutachter durch die visuelle Übertragung des Aufbringens dennoch den Prozess überwachen kann.

Das Kundenendgerät und die Kennzeichnungseinheit sind separate Einheiten. Die erste Position und die zweite Position können gleich oder ungleich sein. Das Gutachterendgerät kann ein, zwei oder mehrere miteinander verbindbare und/oder verbundene Einheiten aufweisen. Beispielsweise kann das Gutachterendgerät eine Anzeigevorrichtung, eine Recheneinheit und eine Einheit zur Errichtung einer Datenverbindung aufweisen. Diese einzelnen Einheiten können integriert und/oder getrennt voneinander vorliegen.

Insbesondere kann die Einheit zur Erzeugung der zweiten Kennzeichnung separat von der Anzeige der visuellen Übertragung des Aufbringens sein. Durch das Verfahren wird vermieden, dass das Gutachterendgerät und das Kundenendgerät an selben Ort vorliegen müssen. Lediglich das Kundenendgerät und die Kennzeichnungseinheit müssen am selben Ort sein. Informationen werden durch ein Scannen eines QR-Codes übermittelt.

In einer bevorzugten Ausführungsvariante des Verfahrens ist vorgesehen, dass dieses den Schritt umfasst: Übertragen der ersten Kennzeichnung des Erzeugnisses an das Gutachterendgerät, wobei das Übertragen vorzugsweise datenbasiert erfolgt, wobei die erste Kennzeichnung beispielsweise einen Werkstoff repräsentiert, und vorzugsweise das Übertragen mit dem Kundenendgerät erfolgt.

In diesem Schritt wird die existierende erste Kennzeichnung, insbesondere ein Abbild der ersten Kennzeichnung, vorzugsweise ein digitales Abbild, des Erzeugnisses an das Gutachterendgerät übertragen. Dies kann beispielsweise durch eine Bilderfassung mittels des Kundenendgeräts und einer Datenverbindung zwischen dem Kundenendgerät und dem Gutachterendgerät erfolgen. Praktisch kann dies beispielsweise durch das Fotografieren der ersten Kennzeichnung und der Übersendung dieses Fotos an das Gutachterendgerät erfolgen. Daher ist es insbesondere bevorzugt, dass das Übertragen der ersten Kennzeichnung datenbasiert erfolgt, um einen schnellen Prozess zu gewährleisten.

Das Verfahren umfasst den Schritt: Verschlüsselung der zweiten Kennzeichnung durch das Gutachterendgerät und Entschlüsselung der zweiten Kennzeichnung durch die Kennzeichnungseinheit.

Eine Verschlüsselung der zweiten Kennzeichnung durch das Gutachterendgerät und Entschlüsselung erst an der Kennzeichnungseinheit erhöht die Manipulationssicherheit des Verfahrens. Insbesondere dadurch, dass das Kundenendgerät keinen unmittelbaren Zugang auf die unverschlüsselte zweite Kennzeichnung hat, kann der im Unternehmen befindliche Bediener die zweite Kennzeichnung nicht ohne die Kennzeichnungseinheit verwenden.

Die zweite Kennzeichnung wird durch einen 2D-Code-Verschlüsselungscode, insbesondere einen Data Matrix Code und/oder einen QR-Code, verschlüsselt.

Mittels eines Verschlüsselungscodes kann das Verfahren in vorteilhafter Weise durchgeführt werden, da das Erzeugen des Verschlüsselungscodes, insbesondere durch das Gutachterendgerät und einer entsprechenden Entschlüsselung durch die Kennzeichnungseinheit in einfacher Weise erfolgen kann. Insbesondere, wenn die Kennzeichnungseinheit durch die notifizierte und/oder zur Abnahme beauftragte Stelle bereitgestellt wird, kann somit ein sicheres Verfahren ermöglicht werden.

Dieses Verfahren umfasst den Schritt: Anzeigen des Verschlüsselungscodes auf dem Kundenendgerät und Aufnahme, insbesondere Scannen, des auf dem Kundenendgerät angezeigten Verschlüsselungscodes mit der Kennzeichnungseinheit und vorzugsweise anschließendes Entschlüsseln.

Die zweite Kennzeichnung wird durch das Gutachterendgerät verschlüsselt in Form eines Verschlüsselungscodes. Der Verschlüsselungscode wird vorzugsweise an das Kundenendgerät versendet. Anschließend wird der Verschlüsselungscode, beispielsweise ein 2D-Code, insbesondere ein Data Matrix Code und/oder ein QR-Code, auf dem Kundenendgerät angezeigt. Hierfür weist das Kundenendgerät beispielsweise einen Bildschirm auf. Durch Aufnahme, insbesondere scannen, des auf dem Kundenendgerät angezeigten Verschlüsselungscodes mit der Kennzeichnungseinheit, kann ein weiterer vorteilhafter Aspekt des Verfahrens genutzt werden, insbesondere der, dass das Kundenendgerät die zweite Kennzeichnung als solche lediglich in verschlüsselter Form anzeigt und bereitstellen kann. Mittels der Kennzeichnungseinheit wird der Verschlüsselungscode anschließend entschlüsselt, so dass die zweite Kennzeichnung für die Kennzeichnungseinheit zur Verfügung steht.

In einer bevorzugten Fortbildung des Verfahrens ist vorgesehen, dass der Verschlüsselungscode eine Information enthält, die eine maximale Kennzeichnungsanzahl an zweiten Kennzeichnungen enthält.

Insbesondere beim Trennen des Erzeugnisses, kann es vorkommen, dass zwei oder mehr zweite Kennzeichnungen auf dem Erzeugnis anzubringen sind. In diesem Fall ist es bevorzugt, dass die zwei oder mehr zweiten Kennzeichnungen in einem engen zeitlichen Abstand auf dem Erzeugnis angebracht werden. Beispielsweise kann der Verschlüsselungscode die Information enthalten, dass die zweite Kennzeichnung zweimal aufgebracht werden darf. Dadurch wird vorzugsweise das Kundenendgerät derart in seiner Funktionalität beschränkt, dass dieses die zweite Kennzeichnung maximal zweimal aufträgt.

Das Verfahren umfasst den Schritt: Identifizierung und/oder Autorisierung des Bedieners der Kennzeichnungseinheit. Es kann erforderlich sein, dass der Bediener der Kennzeichnungseinheit bestimmte Befähigungen benötigt. In diesem Fall ist es bevorzugt, dass der Bediener sich zunächst an der Kennzeichnungseinheit identifiziert und gegebenenfalls autorisiert, um die Kennzeichnungseinheit bedienen zu dürfen. Hierfür umfasst die Kennzeichnungseinheit vorzugsweise eine Identifizierungs- und/oder Autorisierungseinheit.

In einer weiteren bevorzugten Ausführungsvariante des Verfahrens ist vorgesehen, dass die visuelle Übertragung des Aufbringens die Schritte umfasst: Aufnahme eines Bildes und/oder einer Bildabfolge des Aufbringens der zweiten Kennzeichnung, Übertragen des Bildes und/oder der Bildabfolge mittels einer Datenübertragungsverbindung an das Gutachterendgerät, und Anzeigen des Bildes und/oder der Bildabfolge auf einer Anzeigeeinheit, insbesondere einem Bildschirm, des Gutachterendgerätes, und vorzugsweise Speicherung eines zuvor aufgenommenen Videos und/oder der Bildfolge zur lückenlosen Dokumentation des Vorgangs der Begutachtung und Kennzeichnung. Es ist insbesondere bevorzugt, dass die Aufnahme des Bildes und/oder der Bildabfolge mit dem Kundenendgerät erfolgt. Beispielsweise kann das Kundenendgerät ein Smartphone sein, das eine Kamera aufweist, die zur Aufnahme des Bildes und/oder der Bildabfolge verwendet wird. Ferner ist es bevorzugt, dass eine Datenverbindung zwischen dem Kundenendgerät und dem Gutachterendgerät zur Übertragung des Bildes und/oder der Bildabfolge aufgebaut und/oder aufrechterhalten wird. Die Datenverbindung kann beispielsweise über das Internet aufgebaut und/oder aufrechterhalten werden.

Die so erzeugten Videos und/oder Bildfolgen können durch speichern beispielsweise auf dem Gutachterendgerät und/oder einem digitalen Archiv des Gutachters als weiteres Sicherheitsmerkmal des Verfahrens erachtet werden. Mit den so gespeicherten Videos und/oder Bildfolgen lässt sich der Vorgang zur Begutachtung und Kennzeichnung jederzeit detailliert nachvollziehen.

Wird die Trennung z.B. mittels einer Schleifung vorgenommen (z.B. durch Trennscheiben) kann durch die grobe Analyse des Funkenfluges eine wenn auch sehr grobe Abschätzung zum Material des Erzeugnisses erfolgen. Das hier beschriebene Verfahren ist in der Fachwelt als Schleiffunkenanalyse bekannt. Verfügt das Kundenendgerät über eine entsprechende Kamera mit hoher Bildauflösung und das Gutachterendgerät über eine entsprechende Auswertesoftware, bringt das hier beschrieben Verfahren einen deutlichen Authentisierungsgewinn mit sich.

In einer weiteren bevorzugten Fortbildung des Verfahrens ist vorgesehen, dass die Kennzeichnungseinheit die zweite Kennzeichnung durch mechanisches Einwirken auf das Erzeugnis aufbringt und vorzugsweise als ein Nadelmarkierer ausgebildet ist. Das mechanische Einwirken ist vorzugsweise ein Nadeln.

Eine weitere bevorzugte Ausführungsvariante des Verfahrens umfasst den Schritt: Auswertung von Bildern und/oder Bildfolgen in Form einer Schleiffunkenanalyse und/oder einer Funkenprobe, und Bestimmung der Zusammensetzung des Erzeugnisses, insbesondere der chemischen Zusammensetzung des Erzeugnisses.

Gemäß einem weiteren Aspekt wird die eingangs genannte Aufgabe gelöst durch eine Kennzeichnungseinheit zur Begutachtung und Kennzeichnung eines Erzeugnisses, insbesondere zur Durchführung eines Verfahrens nach dem im Vorherigen beschriebenen Aspekt, mit einer ersten Kennzeichnung, die eingerichtet ist, eine zweite Kennzeichnung datenbasiert zu empfangen und die zweite Kennzeichnung auf das Erzeugnis aufzubringen, vorzugsweise mechanisch, insbesondere durch Nadeln.

Das Aufbringen der zweiten Kennzeichnung auf das Erzeugnis kann auf unterschiedlichste Art und Weise erfolgen. Das Aufbringen kann beispielsweise durch einen Farbauftrag, durch eine mechanische Einwirkung, Säureauftrag insbesondere ein Ätzverfahren oder durch jegliche sonstige Kennzeichnungsformen erfolgen. Es ist insbesondere bevorzugt, dass die Kennzeichnungseinheit ein Nadelmarkierer ist. Vorzugsweise umfasst die Kennzeichnungseinheit ein im Vorherigen beschriebenes Kundenendgerät.

Die Kennzeichnungseinheit umfasst einen Scanner zum Erfassen eines Verschlüsselungscodes, insbesondere zum Erfassen eines 2D-Codes, und eine Entschlüsselungseinheit zum Entschlüsseln der zweiten Kennzeichnung aus dem Verschlüsselungscode.

Mittels der Aufnahmeeinheit zum Erfassen eines Verschlüsselungscodes kann beispielsweise ein auf dem Kundenendgerät angezeigter Verschlüsselungscode mit der Kennzeichnungseinheit erfasst werden und anschließend mit der Entschlüsselungseinheit entschlüsselt werden. Somit steht der Kennzeichnungseinheit die zweite Kennzeichnung unverschlüsselt zur Verfügung, währenddessen dem Kundenendgerät lediglich der Verschlüsselungscode zur Verfügung steht.

Die Kennzeichnungseinheit umfasst eine Identifikations- und/oder Autorisationseinheit zum Identifizieren und Autorisieren eines Bedieners.

Darüber hinaus wird die eingangs genannte Aufgabe gelöst durch ein Kennzeichnungssystem zur Begutachtung und Kennzeichnung eines Erzeugnisses, insbesondere zur Durchführung eines Verfahrens nach dem im Vorherigen beschriebenen Aspekt, mit einer ersten Kennzeichnung, die an einer ersten Position des Erzeugnisses angeordnet ist, umfassend ein Gutachterendgerät, das eingerichtet ist, auf Basis der ersten Kennzeichnung, eine zweite Kennzeichnung zu erzeugen, eine Kennzeichnungseinheit, insbesondere eine Kennzeichnungseinheit nach einer der im Vorherigen beschriebenen Ausführungsvarianten, ein Kundenendgerät, das eingerichtet ist, die zweite Kennzeichnung datenbasiert zu empfangen, und die zweite Kennzeichnung der Kennzeichnungseinheit derart bereitzustellen, dass mittels der Kennzeichnungseinheit die zweite Kennzeichnung auf dem Erzeugnis aufbringbar ist, und eine Bilderfassungsvorrichtung zur visuellen Übertragung des Aufbringens der zweiten Kennzeichnung an das Gutachterendgerät.

In einer bevorzugten Fortbildung des Kennzeichnungssystems ist vorgesehen, dass das Kundenendgerät die Bilderfassungsvorrichtung umfasst. Die Bilderfassungsvorrichtung kann beispielsweise eine Kamera eines Smartphones sein.

Ferner wird die eingangs genannte Aufgabe gelöst durch ein erstes Computerprogrammprodukt, insbesondere zur Durchführung eines Verfahrens nach dem im Vorherigen beschriebenen Aspekt und/oder zum Einsatz in einer Kennzeichnungseinheit und/oder einem Kennzeichnungssystem nach den im Vorherigen beschriebenen Aspekten, umfassend Befehle, die bei der Ausführung des Programms durch einen Computer oder eine computerähnliche Einheit diesen veranlassen, die Schritte auszuführen: Erzeugen einer zweiten Kennzeichnung auf Basis einer ersten Kennzeichnung, die an einer ersten Position des Erzeugnisses angeordnet ist, und datenbasiertes Übertragen der zweiten Kennzeichnung auf eine Kennzeichnungseinheit zur Begutachtung und Kennzeichnung eines Erzeugnisses.

Gemäß einem weiteren Aspekt der Erfindung wird die eingangs genannte Aufgabe gelöst durch ein zweites Computerprogrammprodukt, umfassend Befehle, die bei der Ausführung des Programms durch einen Computer oder eine computerähnliche Einheit diesen veranlassen, zur Erfassung und Auswertung von verschiedenen Funkenbilder unterschiedlicher Metallmaterialien, die folgenden Schritte auszuführen: Aufnehmen von Bildern durch ein Kundenendgerät und Übertragung an ein Gutachterendgerät, Auswertung der so übertragenen Bilder durch das Gutachterendgerät in Form einer Schleiffunkenanalyse und/oder Funkenprobe, und Erzeugung einer ersten Bestimmung der Zusammensetzung der Werkstoffe, insbesondere für den Fall, dass der Metallmaterial ein Eisenwerkstoff ist.

Die Schleiffunkenanalyse bzw. Funkenprobe ist eine Werkstoffprüfung zur groben Bestimmung der quantitativen chemischen Zusammensetzung von Werkstoffen, insbesondere Metallwerkstoffen, vorzugsweise Eisenwerkstoffen. Schleiffunkenanalyse bzw. Funkenprobe beruht auf der unterschiedlichen Farbe und Form des Funkenbildes, wenn ein Prüfling gegen eine rotierende Schleifscheibe gehalten wird. Durch Vergleichen des Funkenbildes mit vordefinierten Funkenbildern kann ein Rückschluss auf die Zusammensetzung erfolgen. Die Schleiffunkenanalyse bzw. Funkenprobe können zusätzlich bei im Vorherigen erläuterten Verfahren bzw. in den entsprechenden Systemen angewendet werden.

Insbesondere können einzelne im Vorherigen genannte Merkmale des zweiten Computerprogrammprodukts in den im Vorherigen genannten Verfahren und Systemen verwendet werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zur Begutachtung und Kennzeichnung eines Erzeugnisses und/oder der Kennzeichnungseinheit verwiesen.

Bevorzugte Ausführungsbeispiele werden exemplarisch anhand der beiliegenden Figuren erläutert. Es zeigen:
- Figur 1:: eine schematische Ansicht einer beispielhaften Ausführungsform eines Kennzeichnungssystems zur Begutachtung und Kennzeichnung eines Erzeugnisses;
- Figur 2:: eine schematische Ansicht eines Verfahrens zur Begutachtung und Kennzeichnung eines Erzeugnisses; und
- Figur 3:: ein weiteres schematisches Verfahren.

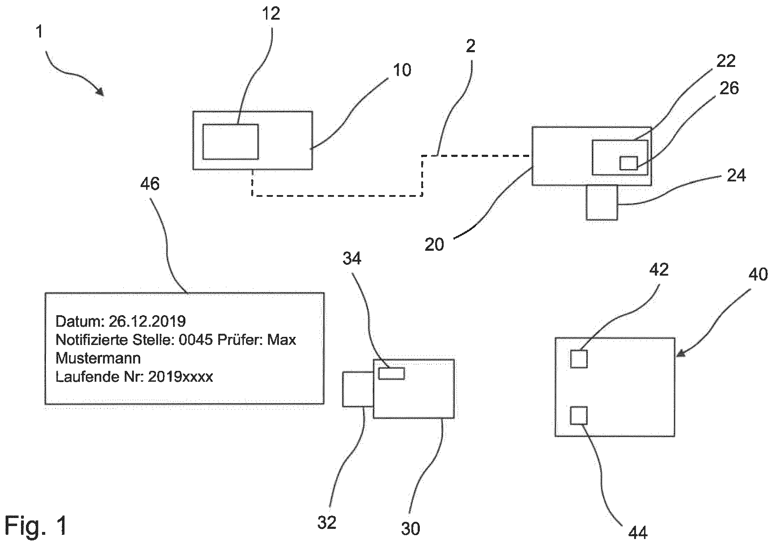

Figur 1 zeigt eine schematische Ansicht einer beispielhaften Ausführungsform eines Kennzeichnungssystems 1. Das Kennzeichnungssystem 1 umfasst ein Gutachterendgerät 10, ein Kundenendgerät 20 und eine Kennzeichnungseinheit 30. Das Kennzeichnungssystem 1 wird zur Begutachtung und Kennzeichnung des Erzeugnisses 40 verwendet. Das Erzeugnis 40 weist eine erste Kennzeichnung 42 auf, die umgestempelt werden muss. Das Ergebnis der Begutachtung und Kennzeichnung ist die zweite Kennzeichnung 44.

Das Gutachterendgerät 10 umfasst eine erste Anzeigeeinheit 12. Während der Durchführung des der Begutachtung und Kennzeichnung befindet sich das Gutachterendgerät 10 vorzugsweise räumlich entfernt von dem Erzeugnis 40. Insbesondere ist es bevorzugt, dass sich das Gutachterendgerät 10 bei einer Gutachterstelle befindet und sich das Erzeugnis 40 bei einem Kunden befindet. Das Kundenendgerät 20 umfasst eine zweite Anzeigeeinheit 22, die beispielsweise als ein Bildschirm ausgebildet sein kann. Darüber hinaus umfasst das Kundenendgerät 20 eine erste Aufnahmeeinheit 24. Die erste Aufnahmeeinheit 24 kann beispielsweise eine Videokamera sein, mit der ein Aufbringen der zweiten Kennzeichnung 44 gefilmt werden kann. Das Kundenendgerät 20 ist ferner vorzugsweise ausgebildet, eine Datenverbindung 2 mit dem Gutachterendgerät 10 aufzubauen bzw. zu unterhalten.

Die Kennzeichnungseinheit 30 umfasst eine zweite Aufnahmeeinheit 32, die beispielsweise als ein Scanner ausgebildet sein kann. Die zweite Aufnahmeeinheit 32 ist insbesondere angeordnet und ausgebildet, einen auf der zweiten Anzeigeeinheit 22 des Kundenendgerätes 20 angezeigten Verschlüsselungscodes 26 zu erfassen, insbesondere zu scannen. Nachdem der Verschlüsselungscode 26 von der Kennzeichnungseinheit 30 erfasst wurde, kann diese mit der Entschlüsselungseinheit 34 entschlüsselt werden, so dass die zweite Kennzeichnung 44 datenbasiert, also insbesondere ein digitales Abbild der zweiten Kennzeichnung 44, vorliegt. Im Anschluss kann die zweite Kennzeichnung 44 auf dem Erzeugnis 40 mittels der Kennzeichnungseinheit 30 aufgebracht werden. Dieses Aufbringen kann beispielsweise durch Nadeln erfolgen.

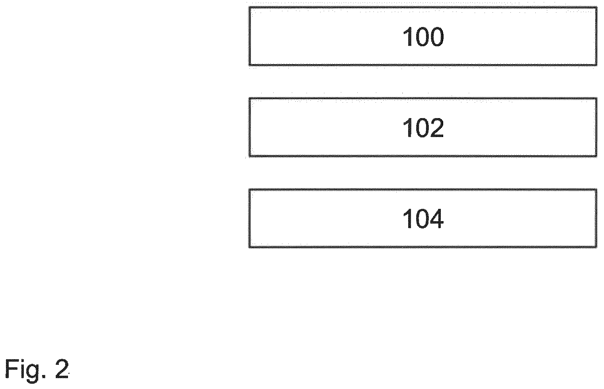

Figur 2 zeigt die Schritte zur Begutachtung und Kennzeichnung eines Erzeugnisses mit einer ersten Kennzeichnung 42. In Schritt 100 wird eine zweite Kennzeichnung 44 auf Basis der ersten Kennzeichnung 42 erzeugt. Die erste Kennzeichnung 42 ist an einer ersten Position des Erzeugnisses 40 angeordnet. Das Erzeugen der zweiten Kennzeichnung 44 erfolgt mittels des Gutachterendgerätes 10.

In Schritt 102 wird die zweite Kennzeichnung 44 datenbasiert durch das Kundenendgerät 20 empfangen. Darüber hinaus wird in Schritt 102 die zweite Kennzeichnung 44 datenbasiert an die Kennzeichnungseinheit 30 übertragen.

In Schritt 104 wird die zweite Kennzeichnung 44 an einer zweiten Position des Erzeugnisses 40 mittels der Kennzeichnungseinheit 30 aufgebracht. Während die zweite Kennzeichnung 44 an der zweiten Position des Erzeugnisses 40 aufgebracht wird, wird dieser Vorgang mittels der ersten Aufnahmeeinheit 24 des Kundenendgerätes 20 visuell an das Gutachterendgerät 10 übertragen. Beispielsweise kann also das Aufbringen der zweiten Kennzeichnung 44 gefilmt werden und insbesondere in Echtzeit an das Gutachterendgerät 10 übertragen werden.

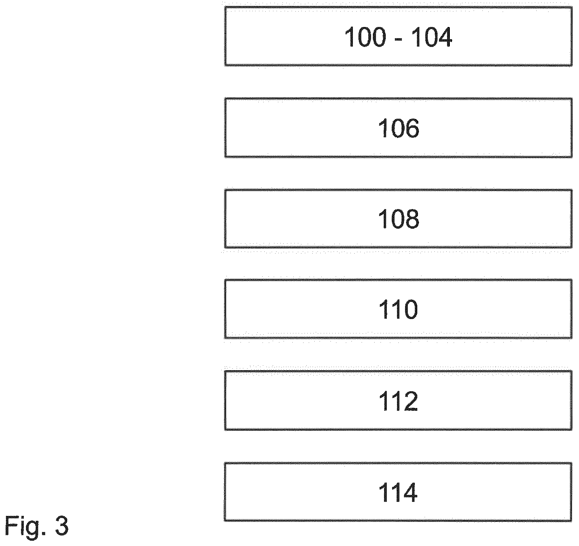

Figur 3 zeigt weitere Schritte 106 - 114, die bevorzugte Merkmale des im Vorherigen beschriebenen Verfahrens zeigen. In Schritt 106 wird die erste Kennzeichnung 42 des Erzeugnisses 40 an das Gutachterendgerät 10 übertragen, wobei das Übertragen vorzugsweise datenbasiert erfolgt, und wobei die erste Kennzeichnung 42 einen Werkstoff repräsentiert.

In Schritt 108 erfolgt eine Verschlüsselung der zweiten Kennzeichnung 44 durch das Gutachterendgerät 10 und eine Entschlüsselung der zweiten Kennzeichnung 44 durch die Kennzeichnungseinheit 30.

In Schritt 110 wird der Verschlüsselungscode 26 auf dem Kundenendgerät 20 angezeigt und mit der Kennzeichnungseinheit 30, insbesondere durch Scannen, aufgenommen. Vorzugsweise wird anschließend der Verschlüsselungscode 26 entschlüsselt.

In Schritt 112 findet eine Identifizierung und Autorisierung des Bedieners der Kennzeichnungseinheit 30 statt. Im Schritt 114 sind die folgenden drei Unterschritte der visuellen Übertragung des Aufbringens zusammengefasst. Zunächst erfolgt eine Aufnahme eines Bildes und/oder einer Bildabfolge des Aufbringens der zweiten Kennzeichnung 44. Anschließend wird das Bild und / oder die Bildabfolge mittels einer Datenübertragungsverbindung 2 an das Gutachterendgerät 10 übertragen. Ferner wird das Bild oder die Bildabfolge auf der Anzeigeeinheit 12 des Gutachterendgerätes 10 angezeigt.

Durch das im Vorherigen beschriebene Verfahren und das entsprechende Kennzeichnungssystem zur Begutachtung und Kennzeichnung eines Erzeugnisses wird der Prozess in Unternehmen effizienter gestaltet. Insbesondere durch die Vermeidung der Anforderung, dass ein Gutachter persönlich während der Begutachtung und Kennzeichnung anwesend sein muss, werden auf Seiten des Unternehmens, wie auch auf Seiten der Gutachterstelle, Kosten reduziert. Darüber hinaus werden die Fertigungsprozesse beim Kunden beschleunigt, da die Erzeugnisse innerhalb kürzester Zeit umgestempelt werden können und nicht lange auf den Prozess zur Begutachtung und Kennzeichnung gewartet werden muss.

### BEZUGSZEICHENLISTE

- 1: Kennzeichnungssystem
- 2: Datenübertragungsverbindung
- 10: Gutachterendgerät
- 12: erste Anzeigeeinheit
- 20: Kundenendgerät
- 22: zweite Anzeigeeinheit
- 24: erste Aufnahmeeinheit
- 26: Verschlüsselungscode
- 30: Kennzeichnungseinheit
- 32: zweite Aufnahmeeinheit
- 34: Entschlüsselungseinheit
- 40: Erzeugnis
- 42: erste Kennzeichnung
- 44: zweite Kennzeichnung
- 46: dritte Kennzeichnung

## Patentansprüche

1. Verfahren zur Begutachtung und Kennzeichnung eines Erzeugnisses mit einer ersten Kennzeichnung, die einen Werkstoff repräsentiert und an einer ersten Position des Erzeugnisses angeordnet ist, umfassend die Schritte:
- Datenbasiertes Übertragen der ersten Kennzeichnung des Erzeugnisses mit einem Kundenendgerät an ein Gutachterendgerät,
- Erzeugen einer zweiten Kennzeichnung auf Basis der ersten Kennzeichnung, wobei das Erzeugen der zweiten Kennzeichnung mittels des Gutachterendgeräts erfolgt,
- Verschlüsselung der zweiten Kennzeichnung durch das Gutachterendgerät, wobei die zweite Kennzeichnung durch einen Verschlüsselungscode verschlüsselt wird, der durch einen 2D-Code gebildet ist,
- Datenbasiertes Empfangen der zweiten Kennzeichnung durch das Kundenendgerät,
- Datenbasiertes Übertragen der zweiten Kennzeichnung an eine von dem Kundenendgerät separat ausgebildete Kennzeichnungseinheit, wobei das datenbasierte Übertragen der zweiten Kennzeichnung an die Kennzeichnungseinheit umfasst: Anzeigen des Verschlüsselungscodes auf dem Kundenendgerät und Scannen des auf dem Kundenendgerät angezeigten Verschlüsselungscodes mit der Kennzeichnungseinheit,
- Entschlüsselung der zweiten Kennzeichnung durch die Kennzeichnungseinheit,
- Identifizierung und/oder Autorisierung eines Bedieners der Kennzeichnungseinheit, und
- Aufbringen der zweiten Kennzeichnung an einer zweiten Position des Erzeugnisses mittels der Kennzeichnungseinheit und visuelle Übertragung einer Bildabfolge des Aufbringens an das Gutachterendgerät.

2. Verfahren nach einem der vorherigen Ansprüche, wobei
- der Verschlüsselungscode einen Data Matrix Code und/oder einen QR-Code umfasst.

3. Verfahren nach einem der vorherigen Ansprüche, wobei der Verschlüsselungscode eine Information enthält, die eine maximale Kennzeichnungsanzahl an zweiten Kennzeichnungen enthält.

4. Verfahren nach einem der vorherigen Ansprüche, wobei die visuelle Übertragung des Aufbringens die Schritte umfasst:
- Aufnahme der Bildabfolge des Aufbringens der zweiten Kennzeichnung,
- Übertragen der Bildabfolge mittels einer Datenübertragungsverbindung an das Gutachterendgerät, und
- Anzeigen der Bildabfolge auf einer Anzeigeeinheit, insbesondere einem Bildschirm, des Gutachterendgerätes, und vorzugsweise
- Speicherung eines zuvor aufgenommenen Videos und/oder der Bildfolge zur lückenlosen Dokumentation des Vorgangs der Begutachtung und Kennzeichnung.

5. Verfahren nach einem der vorherigen Ansprüche, wobei
- die Kennzeichnungseinheit die zweite Kennzeichnung durch mechanisches Einwirken auf das Erzeugnis aufbringt und vorzugsweise als ein Nadelmarkierer ausgebildet ist.

6. Kennzeichnungseinheit zur Begutachtung und Kennzeichnung eines Erzeugnisses mit einer ersten Kennzeichnung, die einen Werkstoff repräsentiert und eingerichtet ist, eine zweite Kennzeichnung datenbasiert zu empfangen und die zweite Kennzeichnung auf das Erzeugnis aufzubringen,
wobei die Kennzeichnungseinheit einen Scanner zum Erfassen eines als 2D-Code ausgebildeten Verschlüsselungscodes und eine Entschlüsselungseinheit zum Entschlüsseln der zweiten Kennzeichnung aus dem Verschlüsselungscode umfasst, wobei die Kennzeichnungseinheit ferner eine Identifikations- und Autorisationseinheit zum Identifizieren und Autorisieren eines Bedieners umfasst.

7. Kennzeichnungseinheit nach dem vorherigen Anspruch, wobei die Kennzeichnungseinheit ferner dazu eingerichtet ist, die zweite Kennzeichnung mechanisch aufzubringen, insbesondere durch Nadeln.

8. Kennzeichnungssystem zur Begutachtung und Kennzeichnung eines Erzeugnisses mit einer ersten Kennzeichnung, die einen Werkstoff repräsentiert und an einer ersten Position des Erzeugnisses angeordnet ist, umfassend
- ein Gutachterendgerät, das eingerichtet ist, auf Basis der ersten Kennzeichnung eine zweite Kennzeichnung zu erzeugen und durch einen Verschlüsselungscode zu verschlüsseln, der durch einen 2D-Code gebildet ist,
- eine Kennzeichnungseinheit nach einem der Ansprüche 6 oder 7,
- ein Kundenendgerät, das eingerichtet ist,
∘ die zweite Kennzeichnung datenbasiert zu empfangen, und
∘ den Verschlüsselungscode anzuzeigen, und
- eine Bilderfassungsvorrichtung zur visuellen Übertragung einer Bildabfolge eines Aufbringens der zweiten Kennzeichnung an das Gutachterendgerät.

9. Computerprogrammprodukt zum Einsatz in einem Kennzeichnungssystem nach Anspruch 8, umfassend Befehle, die bei der Ausführung des Programms durch einen Computer oder eine computerähnliche Einheit diesen veranlassen, die Schritte des Verfahrens nach einem der Ansprüche 1 bis 5 auszuführen.

## Claims

1. Method for assessing and marking a product with a first marking representing a material and located at a first position of the product, comprising the steps:
- Data-based transfer of the first marking of the product with a customer terminal device to an appraiser's device,
- Generating a second marking on the basis of the first marking, whereby the generation of the second marking is done by means of the appraiser's device,
- Encryption of the second marking by the appraiser's terminal, wherein the second marking is encrypted by an encryption key formed by a 2D code,
- Data-based receipt of the second marking by the customer's device,
- Data-based transfer of the second marking to an identification unit, the identification unit being formed separately from the customer terminal, whereby the data-based transfer of the second marking to the identification unit includes: displaying the encryption key on the customer terminal and scanning the encryption key displayed on the customer terminal with the identification unit,
- decoding of the second marking by the marking unit,
- Identification and/or authorization of an operator of the identification unit, and
- Application of the second marking at a second position of the product by means of the marking unit and visual transmission of an image sequence of the application to the appraiser's end device.

2. Method according to one of the previous claims, wherein
- the encryption key includes a data matrix code and/or a QR code.

3. Method according to one of the previous claims, wherein the encryption key contains information containing a maximum number of labels of second labels.

4. Method according to one of the previous claims, wherein the visual transfer of the application includes the steps:
- Recording of the sequence of images of the application of the second marking,
- transmitting the image sequence to the appraiser's terminal device by means of a data transmission connection, and
- Display of the image sequence on a display unit, in particular a screen, of the appraiser's device, and preferably
- Storage of a previously recorded video and/or the sequence of images for complete documentation of the process of assessment and labeling.

5. Method according to one of the previous claims, wherein
- the marking unit applies the second marking to the product by mechanical action and is preferably designed as a needle marker.

6. A marking unit for the assessment and marking of a product with a first marking representing a material and is set up to receive a second marking on a data-based basis and to apply the second marking to the article,
wherein the marking unit comprises a scanner for capturing an encryption key designed as a 2D code and a decryption unit for deciphering the second marking from the encryption code, wherein the identification unit further includes an identification and authorization unit for identifying and authorizing an operator.

7. A marking unit according to the previous claim, wherein the marking unit is further equipped to apply the second marking mechanically, in particular by means of needles.

8. Marking system for the assessment and marking of a product with a first marking representing a material and located at a first position of the product, comprising
- an expert terminal device that is set up to generate a second marking on the basis of the first marking and to encrypt it by means of an encryption key formed by a 2D code,
- a marking unit according to any one of claims 6 or 7,
- a customer terminal that is set up
∘ to receive the second designation on a data-based basis, and
∘ to display the encryption key, and
- an image capture device for the visual transmission of an image sequence of an application of the second marking to the appraiser's device.

9. A computer program product for use in a marking system according to claim 8, comprising commands which, when executed by a computer or a computer-like unit, cause it to execute the steps of the method according to any one of claims 1 to 5.

## Revendications

1. Procédé d'inspection et de marquage d'un produit ayant un premier marquage représentant un matériau et agencé à une première position du produit, comprenant les étapes suivantes :
- le transfert sur la base de données du premier marquage du produit avec un terminal client vers un terminal d'expertise,
- la génération d'un deuxième marquage sur la base du premier marquage, la génération du deuxième marquage étant effectuée au moyen du terminal d'expertise,
- le chiffrement du deuxième marquage par le terminal d'expertise, le deuxième marquage étant chiffré par un code de chiffrement formé par un code 2D,
- la réception sur la base de données du deuxième marquage par le terminal client,
- la transmission sur la base de données du deuxième marquage à une unité de marquage réalisée séparément du terminal client, la transmission sur la base de données du deuxième marquage à l'unité de marquage comprenant : l'affichage du code de chiffrement sur le terminal client et la lecture par balayage du code de chiffrement affiché sur le terminal client avec l'unité de marquage,
- le déchiffrement du deuxième marquage par l'unité de marquage,
- l'identification et/ou l'autorisation d'un opérateur de l'unité de marquage, et
- l'application du deuxième marquage à une deuxième position du produit au moyen de l'unité de marquage et le transfert visuel d'une séquence d'images de l'application au terminal d'expertise.

2. Procédé selon l'une quelconque des revendications précédentes, dans lequel
- le code de chiffrement comprend un code Data Matrix et/ou un code QR.

3. Procédé selon l'une quelconque des revendications précédentes, dans lequel le code de chiffrement contient des informations contenant un nombre de marquages maximal de deuxièmes marquages.

4. Procédé selon l'une quelconque des revendications précédentes, dans lequel le transfert visuel de l'application comprend les étapes suivantes :
- l'enregistrement de la séquence d'images de l'application du deuxième marquage,
- le transfert de la séquence d'images au terminal d'expertise au moyen d'une liaison de transfert de données, et
- l'affichage de la séquence d'images sur une unité d'affichage, notamment un écran, du terminal d'expertise, et de préférence
- le stockage d'une vidéo préalablement enregistrée et/ou de la séquence d'images pour la documentation complète du processus d'expertise et de marquage.

5. Procédé selon l'une quelconque des revendications précédentes, dans lequel
- l'unité de marquage applique le deuxième marquage par action mécanique sur le produit et est de préférence réalisée sous la forme d'un marqueur à aiguille.

6. Unité de marquage pour l'inspection et le marquage d'un produit avec un premier marquage qui représente un matériau et est adaptée pour recevoir un deuxième marquage sur la base de données et pour appliquer le deuxième marquage sur le produit,
l'unité de marquage comprenant un scanner pour détecter un code de chiffrement réalisé sous forme de code 2D et une unité de déchiffrement pour déchiffrer le deuxième marquage à partir du code de chiffrement, l'unité de marquage comprenant en outre une unité d'identification et d'autorisation pour identifier et autoriser un opérateur.

7. Unité de marquage selon la revendication précédente, l'unité de marquage étant en outre adaptée pour appliquer mécaniquement le deuxième marquage, en particulier par des aiguilles.

8. Système de marquage pour l'inspection et le marquage d'un produit avec un premier marquage représentant un matériau et agencé à une première position du produit, comprenant
- un terminal d'expertise adapté pour générer un deuxième marquage sur la base du premier marquage et pour le chiffrer par un code de chiffrement formé par un code 2D,
- une unité de marquage selon l'une quelconque des revendications 6 et 7,
- un terminal client adapté pour
∘ recevoir le deuxième marquage sur la base de données, et
∘ afficher le code de chiffrement, et
- un dispositif de capture d'images destiné à la transmission visuelle d'une séquence d'images d'une application du deuxième marquage au terminal d'expertise.

9. Produit programme informatique destiné à être utilisé dans un système de marquage selon la revendication 8, comprenant des instructions qui, lorsque le programme est exécuté par un ordinateur ou une unité semblable à un ordinateur, amènent ce dernier à exécuter les étapes du procédé selon l'une quelconque des revendications 1 à 5.
